# EUROPÄISCHE PATENTSCHRIFT

(11) **EP 0 398 459 B1**
(45) Veröffentlichungstag und Bekanntmachung des Hinweises auf die Patenterteilung: **18.11.1993**
(21) Anmeldenummer: 90250124.6
(22) Anmeldetag: 11.05.1990
(51) Int. Cl.: B01D 46/52, B01D 46/10

(54) **Filtereinsatz**
Filter cartridge
Cartouche filtrante

(30) Priorität: 19.05.1989 DE 3916838
(43) Veröffentlichungstag der Anmeldung: 22.11.1990
(73) Patentinhaber: Lippold, Hans-Joachim, Dr., D-14089 Berlin (DE)
(72) Erfinder: Lippold, Hans-Joachim, Dr., D-14089 Berlin (DE)
(74) Vertreter: Hering, Hartmut, Dipl.-Ing.

(56) Entgegenhaltungen:
- FR-A- 2 427 123
- FR-A- 2 470 630
- US-A- 3 531 920

## Beschreibung

Die Erfindung betrifft einen Filtereinsatz der im Oberbegriff des Anspruchs 1 angegebenen Art sowie ein Verfahren zu seiner Herstellung.

Ein derartiger Filtereinsatz zur Filterung von Gasen, insbesondere von Luft, ist aus der DE-A-19 30 715 bekannt.

Dabei besteht der Filtereinsatz aus einem Filtermedium, aus einem aushärtbaren Werkstoff. Desweiteren ist das Filtermedium im Zick-Zack gefaltet und in einem rechteckigen Rahmen befestigt. Beim Filtervorgang tritt das zu filternde Medium von einem Kantenbereich der Zick-Zack-Faltung in Richtung auf den gegenüberliegenden Kantenbereich der Faltung durch die Faltenwand hindurch. Aus Faltenwänden der Zick-Zack-Faltung treten eingeprägte Vorsprünge beidseitig hervor. Die Vorsprünge sind dabei so angeordnet, daß jedem erhabenen Vorsprung in der Faltenwand ein entsprechender ebenfalls erhabener Vorsprung in der benachbarten Faltenwand derart zugewandt ist, daß diese Vorsprünge durch die Zick-Zack-Faltung aufeinander zu liegen kommen und sich im Bereich der Berührungsflächen abstützen.

Als nachteilig erweist sich dabei, daß das Filtermedium Kunstharz oder einem anderen aushärtbaren Stoff enthält. Dadurch sind nämlich die Filtereigenschaften des Filtermediums aufgrund der durch Einlagerung bzw. Beschichtung sich ergebenden erhöhten Druckdifferenz eingeschränkt. Der die Formstabilität des Filtermediums erhöhende, eingebrachte Binder, insbesondere in Form von Kunstharzen, verringert die Durchlässigkeit. Höhere notwendige Kräfte, verstärkte Geräuschentwicklung und eine geringere Lebensdauer des Filtereinsatzes sind die Folge. Desweiteren ist das Filtermedium aufwendig herzustellen, da jeweils der Binder bzw. das Kunstharz zusätzlich eingebracht werden muß.

Es ist weiterhin aus der DE-A-28 13 356 ein aus Kunststoffasern bestehendes Filtermedium bekannt, das bei hoher Durchlässigkeit eine allerdings nur geringe Formbeständigkeit aufweist. Nachteilig ist dabei allerdings, daß dieses Material wegen seiner watteartigen Konsistenz mit geringer Quer- bzw. Längssteifigkeit seine Form nicht beibehält.

Der Erfindung liegt die Aufgabe zugrunde, bei einem Filtereinsatz der eingangs genannten Gattung auf einfache Weise eine bleibende Formgebung zu ermöglichen, wobei die günstigen Filtereigenschaften in den unverformten Bereichen erhalten bleiben sollen.

Diese Aufgabe wird mit den kennzeichnenden Merkmalen des Anspruchs 1 gelöst.

Die Erfindung beruht auf der Erkenntnis, daß durch Beigabe mindestens eines Anteils von thermoplastischen Fasern und bleibender Verformung durch Wärmebehandlung unter Verschweißung Bereiche höherer Steifigkeit innerhalb der Filterschicht gezielt herstellbar sind, wobei trotz der durch Verschweißen erhöhten Materialdichte die Filtereigenschaften in den für den Durchtritt des zu filternden Mediums maßgeblichen Bereichen im wesentlichen unbeeinträchtigt bleiben.

Durch die Möglichkeit, einzelne Filterlagen zu verbinden und somit durch thermisches Verkleben ein Lösen der einzelnen Lagen voneinander zu verhindern, aber auch aufgrund der verbesserten hohen örtlichen Quer- bzw. Längssteifigkeit sind die erfindungsgemäß behandelten Filtermedien faltbar und für übliche Filtereinsätze geeignet.

Die thermoplastischen Fasern werden in den für den Mediumdurchsatz wesentlichen (nicht geprägten) Bereichen nicht oder nur soweit thermisch behandelt, wie die Filtereigenschaften nicht beeinträchtigt werden. In den geprägten Zonen, welche das Filtermedium in der gewünschten Zick-Zack-Faltung im notwendigen Abstand halten, erhalten die ausgeprägten Zwischenstege die notwendige Festigkeit, um die Form des Filtermaterials bis zum Ende der Benutzungszeit sicher aufrechtzuerhalten. Auf diese Weise läßt sich bei einem relativ weichen und formflexiblen Medium durch einen einfachen Vorgang lokal hohe Formfestigkeit erzielen, ohne daß zusätzliches Material aus einem anderen Grundstoff verwendet werden müßte. Die örtliche Verteilung der festigkeitserhöhenden Maßnahmen wird exakt entsprechend den belastungsmäßigen Erfordernissen vorgenommen. Dabei lassen sich bei bevorzugten Ausführungsformen gleichzeitig Falze für Faltkanten oder rippenartige Versteifungen erzeugen. Die Kompression unter thermischer Einwirkung kann graduell unterschiedlich erfolgen, wobei im Extremfall eine vollständige Verdichtung vorgenommen werden kann, so daß lokal keinerlei Lufteinschlüsse mehr in den Filterschichten verbleiben.

Als weiterer Vorteil ergibt sich, daß eine eventuelle durch den Prägevorgang hervorgerufene Materialschwächung nicht nur kompensiert, sondern sogar durch lokale Versteifungen ausgeglichen wird.

Die aus Kunststoffasermaterialien bestehenden Filtermedien weisen in vorteilhafter Weise einen höheren Abscheidegrad und geringere Druckdifferenzen gegenüber herkömmlichen Glasfasermaterialien auf. Daraus resultiert eine geringere notwendige Förderleistung und eine höhere Lebensdauer der Filtereinsätze. Hinzu kommt auch noch, daß die entsprechenden Antriebsmittel mit abnehmender Leistung weniger Geräusche verursachen. Vorteilhaft ist weiterhin, daß durch das Einprägen der Vorsprünge in das Filtermedium deren Wandungen trotz geschwächter Wandstärke ein gute Stabilität aufweisen. Damit kann trotz einer verringerten Zahl von Vorsprüngen die Filterfläche noch vergrößert werden. Der Strömungswiderstand wird dabei herabgesetzt, und es sind homogene Strömungsverhältnisse gewährleistet. Daraus resultieren sowohl eine geringere Absaugleistung als auch eine reduzierte Geräuschentwicklung der Filteranlage sowie eine erhöhte Lebensdauer des Filtereinsatzes.

Durch die durch das Verschweißen erhaltene Formfestigkeit, läßt sich das Filtermedium maschinell und automatisch fertigen.

Durch den thermoplastischen, bereichsweise verschweißten Faseranteil wird in vorteilhafter Weise die Stabilität und die Aussteifung des Filtereinsatzes an vorbestimmten Bereichen, insbesondere an Vorsprüngen, entsprechenden Übergangsbereichen und Faltenkanten, erhöht. Die dadurch erzielbare verringerte Anzahl von Vorsprüngen erweist sich als zusätzlich vorteilhaft, da ein günstiges Verhältnis der wirksamen Filterfläche zur Gesamtoberfläche der Faltenwände erreicht wird. Weiterhin können den Strömungsverhältnissen entsprechende zusätzliche lokale Aussteifungen vorgenommen werden. Die Filtereinsätze lassen sich somit auch als Einwegartikel erzeugen, welche kostengünstig herstellbar sind und eine lange Standzeit aufweisen. Die aus thermoplastischem Werkstoff bestehenden Filterwandungen brauchen desweiteren nicht mit festen Abstandshaltern oder Aussteifungen aus Fremdmaterial versehen zu werden.

Insbesondere sind auch folgende vorteilhafte Weiterbildungengünstig:

Nahtförmige Bereiche lassen sich durch durch entsprechende Druck- und/oder Temperaturbedingungen verursachtes Verschweißen von Fasern erzeugen und im Inneren des Filtermediums anordnen. Die Fasern sind dabei ohne wesentliche Hohlräume miteinander verbunden. Das durchlässige Filtermedium ist mehrlagig ausgebildet, wobei einzelne Lagen bereichsweise miteinander verschweißt sind, so daß ein Ablösen der einzelnen Lagen verhindert wird. Weiterhin ist vorteilhaft, wenn das durchlässige Filtermedium Fasern, mindestens aber Faseranteile, aus Polypropylen, Cellulose, Polycarbonat, Polyamid, Teflon und/oder Polyester enthält. Mindestens eine der äußeren Lagen des mehrlagigen Filtermediums ist derart als siebartig gelochte, folienartige Schutzschicht ausgebildet, daß es die Fasern der inneren Lagen vor mechanischem Abtrag schützt. Die Schutzschicht kann dabei selbst auch aus thermoplastischem Werkstoff bestehen. Durch diesen Aufbau ist ein ausreichend hoher thermoplastischer Werkstoffanteil innerhalb des Filtermediums vorhanden und die Filtereigenschaften können den Anforderungen angepaßt werden. Als günstig erweist es sich auch, wenn die nahtförmigen verschweißten Bereiche in Form eines Filmscharniers ausgebildet werden. Weiterhin weisen die eingeprägten Vorsprünge nahtförmige, ausgesteifte Bereiche auf. Die einander zugewandten Vorsprünge benachbarter Faltenwände sind bevorzugt miteinander verschweißt. Dadurch wird die Festigkeit des Filtereinsatzes heraufgesetzt ohne zusätzliches Klebstoffmaterial, zum Verkleben oder Aussteifen, auf den Filtereinsatz aufzubringen. Weiterhin wird eine homogene, materialeinheitliche Oberflächenbeschaffenheit des Filtermediums gewährleistet.

Vorteilhaft ist es weiterhin, wenn das folienartige Filtermedium durch Erwärmen vorbestimmter Bereiche bei definierter Temperatur und definiertem Druck, gleichzeitig oder nacheinander, durch Walzen bzw. Stempel mit nahtförmigen Bereichen versehen wird. In diesen Bereichen werden thermoplastische Fasern bereichsweise verdichtet und verschweißt und das Filtermedium weist somit eine erhöhte Längs- bzw. Quersteifigkeit auf. Dabei werden zunächst nacheinander nahtförmige, insbesondere quernahtförmige, Bereiche durch Schweißung und Verformungen, im wesentlichen Vorsprünge, in Form von thermischen Prägungen des Filtermediums erzeugt. Anschließend wird das Filtermedium so gefaltet, daß die benachbarten, einander zugewandten Vorsprünge aneinander anliegen. Die Vorsprünge können wahlweise vor dem Zusammenfalten von einer zugeordneten Heizvorrichtung noch so hoch erhitzt und angeschweißt werden, daß die verflüssigten Oberflächenbereiche der Vorsprünge erst nach dem Zusammenfalten des Filtermediums, wenn die angeschweißten, benachbarten, einander zugewandten Vorsprünge aneinander anliegen, miteinander verschweißen, verdichten und aushärten. Dem Filtermedium wird vorteilhaft die Wärmeenergie wahlweise durch Infrarotstrahler, Ultraschall, Laserstrahl und/oder, insbesondere kammförmige oder walzen- bzw. stempelförmige, Heizelemente bereichsweise zugeführt.

Durch das Verdichten und Verschweißen erhält das Filtermedium die notwendige Eigensteifigkeit. Somit kann es ohne größeren fertigungstechnischen Aufwand gefaltet und miteinander verklebt werden. Zusätzlich wirken die quernahtförmigen Bereiche beim Faltvorgang als Sollbiegestellen bzw. als Filmscharniere. Ebenfalls durch die thermische und mechanische Behandlung wird im Bereich der Faltkanten, also im quernahtförmigen Bereich, ein Herausragen der Fasern aus dem Filtermedium und ein Abbrechen der Fasern des Filtermediums verhindert.

Andere vorteilhafte Weiterbildungen der Erfindungen sind in den Unteransprüchen gekennzeichnet bzw. werden nachstehend zusammen mit der Beschreibung der bevorzugten Ausführungen der Erfindung anhand der Figuren näher dargestellt. Es zeigen:
Figur 1a eine perspektivische Ansicht eines Teils eines ersten Ausführungsbeispiels des Filtermediums der Erfindung,
Figur 1b eine entsprechende Draufsicht,
Figur 2 einen Querschnitt durch zwei aneinander anliegende Vorsprünge von Faltenwänden, die miteinander verschweißt sind, in vergrößerter Darstellung,
Figur 3 eine perspektivische Darstellung eines Abschnitts eines Herstellungverfahrens des Filtermediums, sowie
Figur 4 eine perspektivische Darstellung eines weiteren Abschnitts des Bearbeitungsverfahrens des Filtermediums.

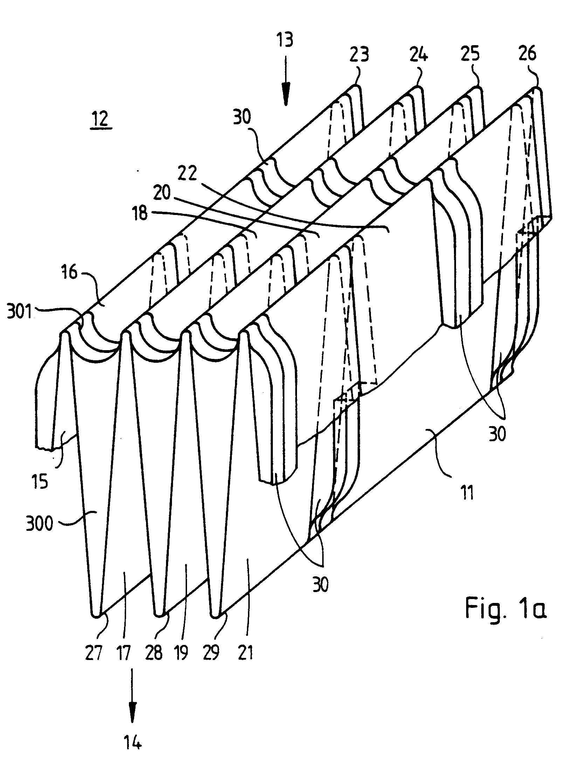

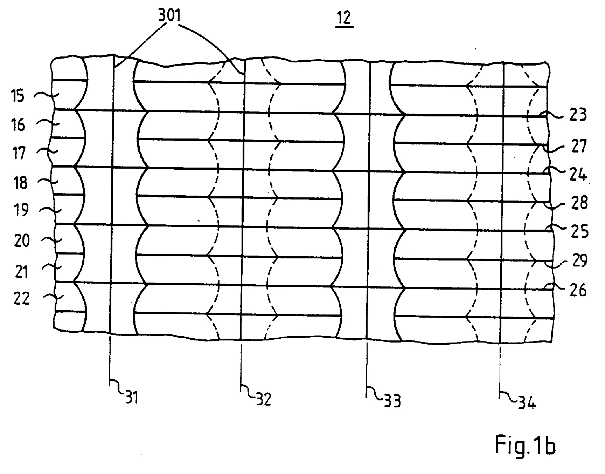

In den Figuren 1a und b ist jeweils ein Ausschnitt eines Filtermediums 11, bestehend aus einem Filtermaterial mit aus thermoplastischen Werkstoff bestehenden Fasern, dargestellt, das durch Zick-Zack-Faltung zu einem im wesentlichen quaderförmigen Filtereinsatz 12 geformt ist.

Der quaderförmige Filtereinsatz 12 paßt in bekannter Weise in einen hier nicht dargestellten Rahmen, der den Filtereinsatz 12 zusätzlich stabilisiert. Der Filtereinsatz kann - je nach Anwendungsfall - gegebenenfalls auch rahmenlos ausgebildet sein, wobei die Außenabmessungen an die für den Filtereinsatz 12 vorgesehene Ausnehmung dem entsprechenden Aufnahmeteil angepaßt sind. Der Filtereinsatz 12 wird von einer Eintrittsseite 13 durch das zu filternde Medium angeströmt, von wo das Strömungsmittel durch das Filtermedium 11 in Richtung einer gegenüberliegenden Austrittsseite 14 strömt, von der es über eine geeignete Abfuhrleitung abgezogen wird oder frei abströmt.

Das Filtermedium 11 ist zick-zackförmig gefaltet, wobei eine Anzahl von Faltenwänden 15 bis 22 jeweils eine Falte bilden. Die Faltenwände 15 und 16 sind durch einen Falz 23 auf der Eintrittsseite 13, die angeströmt wird, miteinander verbunden. Ebenso sind die Faltenwände 17 und 18 durch einen Falz 24, die Faltenwände 19 und 20 durch einen Falz 25 und die Faltenwände 21 und 22 durch einen Falz 26 miteinander verbunden; wohingegen die Faltenwände 16 und 17 durch einen Falz 27 auf der Seite 14 miteinander verbunden sind. In der gleichen Art und Weise sind die Faltenwände 18 und 19 durch einen Falz 28 und die Faltenwände 20 und 21 durch einen Falz 29 auf der Austrittsseite 14 miteinander verbunden. Die Falze 23 bis 29 bilden dabei entsprechende Faltenkanten 23 bis 29. Durch diese Faltung wird die Filtereinsatzoberfläche vergrößert und der Abscheidegrad des Filtereinsatzes 12 heraufgesetzt. Diese Verbesserung resultiert aus einer Optimierung der Geschwindigkeitsverteilung und Senkung der Druckdifferenz. Die Lebensdauer ist gegenüber herkömmlichen entsprechenden Filtern erhöht.

Die Faltenwände 15 bis 22 weisen materialeinheitliche Vorsprünge 30 auf, die durch Prägung des Filtermediums 11 ausgebildet wurden. Die Vorsprünge 30 weisen in Bewegungsrichtung des zu filternden Mediums eine konstante Breite auf. Dabei ist die Breite geringer als die Höhe der maximalen Erhebungen der Vorsprünge bezogen auf die Ebene der Faltenwand. Die Seitenwandungen 300 der Vorsprünge 30 erstrecken sich senkrecht zu den die Faltenwände 15 bis 22 miteinander verbindenden Falzen 23 bis 29. Dabei weisen die Vorsprünge 30, ausgehend von den Falzen 27 bis 29 in Richtung auf die Falze 23 bis 26, eine zunehmende Höhe bezogen auf die Ebene der Faltenwände 15 bis 22 auf.

Der Berührungsbereich ist in Form einer rechteckigen Berührungsfläche der Vorsprünge 30 ausgebildet. Dadurch erhöht sich die Stabilität des Filtereinsatzes. Durch die Prägung der Faltenwände 15 bis 22 wird die Oberfläche des Filterelements entsprechend vergrößert, wobei der zusätzliche benötigte Werkstoff aus der zu prägenden Faltenwand durch den Prägevorgang gezogen wurde. Dadurch sind die Wandungen der Vorsprünge 30 entsprechend dünner ausgebildet.

Im geprägten Bereich, d.h. überall dort, wo das Filtermaterial Zonen auweist, die aus der Ebene, die sich bei Streckung der Zick-Zack-Lagen ergibt, herausragen ist die thermische Verfestigung gemäß der Erfindung vorgesehen, wie es weiter unten näher erläutert ist. Auf diese Weise werden feste Stege gebildet, welche dem Filter eine feste Struktur geben. Wegen der Festigkeit (und damit Belastbarkeit) der Stege kann deren Abstand vergrößert werden, so daß wegen der damit verbundenen Vergrößerung der Filterflächen dessen Effektivität vergrößert wird.

Die Vorsprünge 30 benachbarter Faltenwände 15 bis 22 liegen zur Abstandssicherung und Aussteifung aneinander an. Dabei sind die einander zugewandten Vorsprünge einander benachbarter Faltenwände miteinander verschweißt. Die aneinander anliegenden Vorsprünge 30 zweier über einen Falz 27 verbundenen Faltenwände 16 und 17 sind in Richtung auf den jeweils gegenüberliegenden Falz 23 und 24 in ihrer Höhe, bezogen auf die jeweilige Faltenwand 16 oder 17, zunehmend ausgebildet, so daß zwischen diesen Faltenwänden 16 und 17 ein in Bewegungsrichtung des Mediums abnehmender bzw. nach Durchtritt des Mediums durch die jeweilige Faltenwand 16 oder 17 anwachsender Abstand festliegt. Auf diese Weise ist sichergestellt, daß bei insgesamt laminarer Strömung die gesamte Fläche des Filtermediums gleichmäßig ausgenutzt wird und entlang des Transportwegs des Mediums keine Druckschwankungen auftreten, welche den Strömungswiderstand in unerwünschter Weise vergrößern.

Die Vorsprünge 30 sind entlang von Geraden 31 bis 34, die zueinander gleiche Abstände aufweisen, angeordnet. Dabei treten die Vorsprünge derart abwechselnd aus den Seiten 13 und 14 hervor, daß die Vorsprünge 30 auf den Geraden 31 und 33 aus der Eintrittsseite 13 hervortreten und die weiteren Vorsprünge 30, die entlang der Geraden 32 und 34 angeordnet sind, aus der Austrittsseite 14 hervortreten. Durch diese abwechselnde Anordnung der Vorsprünge 30 wird die Stabilität erhöht, da sowohl auf der Eintrittsseite 13 als auch auf der Austrittsseite 14 die Faltenwände in einem zueinander vorbestimmten Abstand gehalten werden.

Das durchlässige Filtermedium 11 enthält aus einem thermoplastischen Werkstoff bestehende Fasern. Die thermoplastischen Fasern sind dabei in einem solchen Anteil enthalten, daß das Filtermedium 11 mittels lokaler thermischer Behandlung bereichsweise verschweißt und somit in sich selbst verdichtet bzw. ausgesteift und mit gleichartigem Material verbunden ist.

Nahtförmige Bereiche, im wesentlichen die Faltenkanten 23 bis 29, sind durch entsprechende Druck- und/oder Temperaturbedingungen verursachtes Verschweißen von Fasern erzeugt und weisen jeweils die Form eines Filmscharniers auf. Die Fasern sind dabei ohne wesentliche Hohlräume miteinander verbunden. Das durchlässige Filtermedium 11 ist mehrlagig ausgebildet, wobei einzelne Lagen in nahtförmigen Bereichen miteinander verschweißt sind. Die äußeren Lagen bestehen aus Polypropylen, also aus thermoplastischem Werkstoff, und sind derart als siebartig gelochte, folienartige Schutzschicht ausgebildet, daß es die aus watteförmigen Polycarbonat bestehenden Fasern der inneren Lagen vor mechanischem Abtrag schützt. Durch diese Anordnung können die Filtereigenschaften den Anforderungsbedingungen des Herstellungsprozesses sowie des Filterprozesses durch thermische Behandlung angepaßt werden. Dabei sind sowohl die äußeren Lagen als auch das innere Filtermedium bereichsweise miteinander verschweißt, verdichtet und ausgesteift.

Die zunächst durch die Prägung instabil gewordene Wandung der Vorsprünge 30 ist durch thermische Behandlung ausgesteift worden. Ebenso sind unter Wärmeeinwirkung die einander zugewandten, benachbarten, aneinander anliegenden Vorsprünge 30 miteinander verschweißt. Die eingeprägten Vorsprünge 30 weisen längsnahtförmige, ausgesteifte Bereiche 301 auf. Durch das Verschweißen der Vorsprünge miteinander wird die Festigkeit des Filtereinsatzes 12 heraufgesetzt ohne zusätzliches Klebstoffmaterial, zum Verkleben oder Aussteifen, auf den Filtereinsatz 12 aufzubringen. Weiterhin wird eine homogene Oberflächenbeschaffenheit des Filtermediums 11 gewährleistet.

Bei dem Verfahren zur Herstellung des folienartigen Filtermediums 11 wird durch Erwärmen vorbestimmter Bereiche bei definierter Temperatur und definiertem Druck, gleichzeitig oder nacheinander, durch Walzen bzw. Stempel das Filtermedium 11 mit längs- 301 und quernahtförmigen Bereichen versehen. Die quernahtförmigen Bereiche bilden die Faltenkanten 23 bis 29. In diesen Bereichen werden die thermoplastischen Fasern bereichsweise verdichtet und verschweißt. Das Filtermedium 11 weist somit eine erhöhte Längs- bzw. Quersteifigkeit auf. Dabei werden zunächst nacheinander längsnaht- 301 und insbesondere quernahtförmige die Faltenkanten 23 bis 29 bildende Bereiche durch Schweißung und Verformungen, im wesentlichen Vorsprünge 30, in Form von thermischer Prägung des Filtermediums 11 erzeugt. Die Vorsprünge 30 werden anschließend von einer zugeordneten Heizvorrichtung so hoch erhitzt und angeschweißt, daß die verflüssigten Oberflächenbereiche der Vorsprünge 30 erst nach dem Zusammenfalten des Filtermediums 11, wenn die angeschweißten, benachbarten, einander zugewandten Vorsprünge 30 aneinander anliegen, miteinander verschweißen, verdichten und aushärten. Dem Filtermedium 11 wird dabei die Wärmeenergie wahlweise durch Infrarotstrahler, Ultraschall, Laserstrahl und/oder, insbesondere kammförmige oder walzen- bzw. stempelförmige, Heizelemente bereichsweise zugeführt.

Durch das Verdichten und Verschweißen erhält das Filtermedium 11 die notwendige Eigensteifigkeit. Somit kann es ohne größeren fertigungstechnischen Aufwand gefaltet und miteinander verklebt werden. Zusätzlich wirken die quernahtförmigen Bereiche beim Faltvorgang als Sollbiegestellen bzw. als Filmscharniere. Ebenfalls durch die thermische und mechanische Behandlung wird im Bereich der Faltkanten 23 bis 29, also im quernahtförmigen Bereich, ein Herausragen aus dem Filtermedium 11 und ein Abbrechen der Fasern des Filtermediums 11 verhindert.

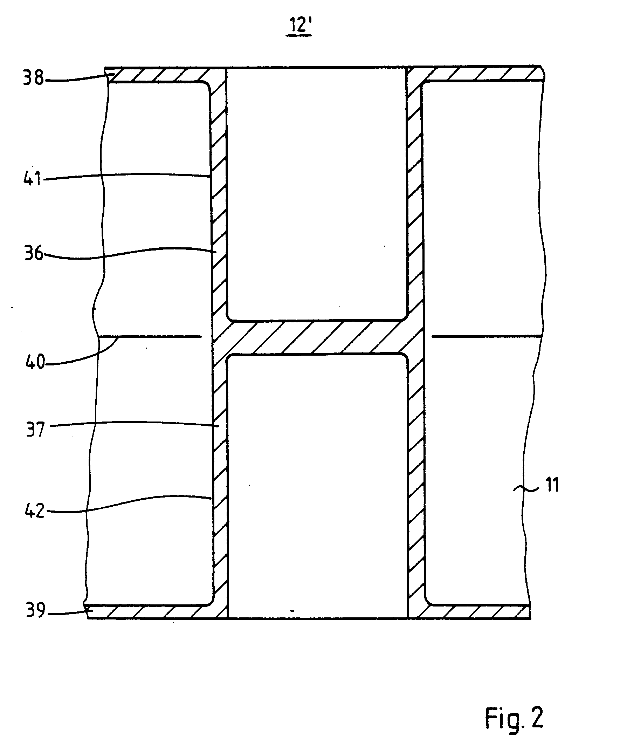

In Figur 2 sind zwei aneinander anliegende Vorsprünge 36 und 37 eines weiteren Ausführungsbeispiels im Querschnitt vergrößert dargestellt, die in Faltenwände 38 und 39 eingeprägt sind. Der Filtereinsatz 12 mit eingeprägten Vorsprüngen 36 und 37 entspricht dabei im wesentlichen dem anhand der Figuren 1a und 1b dargestellten Filtereinsatz 12. Die Vorsprünge 36 und 37 sind ausgehend von einem Falz 40 in Richtung auf die, hier nicht sichtbaren, gegenüberliegenden Falze mit zunehmender Höhe in bezug auf die jeweilige Ebene der Faltenwände 38 und 39 ausgebildet. Die Breite der Vorsprünge 36 und 37 ist konstant. Dabei ist diese Breite geringer als die Höhe der maximalen Erhebungen der Vorsprünge 36 und 37 bezogen auf die jeweiligen Faltenwände 38 und 39.

Auch dieses Filtermedium 11 enthält aus thermoplastischem Werkstoff bestehende Fasern. Die beiden Vorsprünge 36 und 37 sind miteinander verschweißt. Die Verschweißung der beiden Vorsprünge stabilisiert den Filtereinsatz 12 derart, daß der Abstand zwischen den Geraden, auf denen die Vorsprünge 36, 37 und weitere Vorsprünge 30 angeordnet sind, heraufgesetzt worden ist. Durch die strömungsgünstigen Seitenwandungen 41 und 42 strömt das zu filtrierende Medium laminar. Der Strömungswiderstand vermindert sich ebenfalls durch eine geringere Anzahl von Vorsprüngen 30, 36 und 37 und damit vermindert sich auch die zum Absaugen bzw. Durchdrücken benötigte Energie.

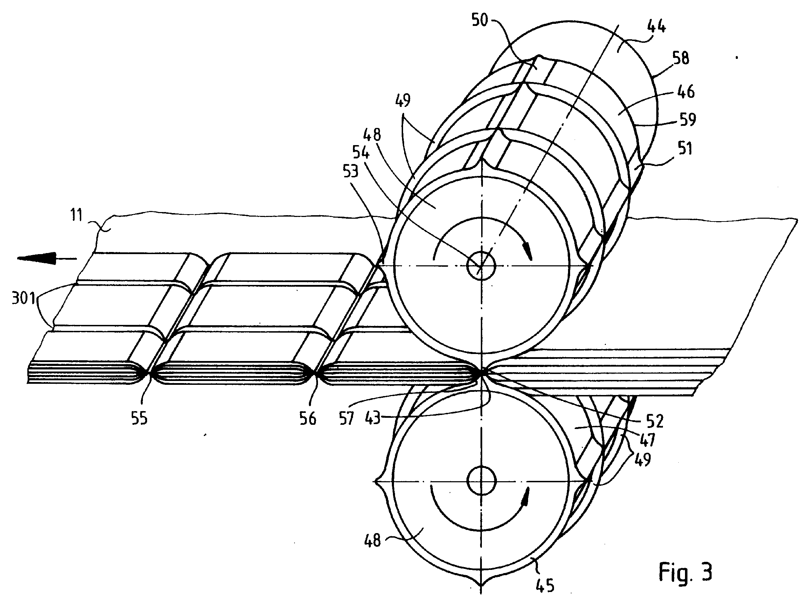

In Figur 3 ist ein Bearbeitungsschritt zur Herstellung des Filtereinsatzes 12 dargestellt. Das mehrlagig ausgebildete Filtermedium 11 wird durch einen Walzspalt 43, der von zwei Walzen 44 und 45 gebildet wird, gezogen. Die Walzen 44 und 45 weisen an ihrer Oberfläche 46 und 47 beheizbare, unterschiedlich angeordnete und ausgebildete Prägeelemente auf. Einerseits sind jeweils zwei den Walzenseitenwandungen 48 parallele Prägeringe 49 auf der Walzenoberfläche 46 und 47 vorgesehen; andererseits sind jeweils vier Prägeleisten 50 bis 53 parallel zur Walzendrehachse 54 und in einem rechten Winkel benachbart zueinander angeordnet.

Ausgehend von der Walzendrehachse 54 wird der Winkel der einzelnen Prägeleisten 50 bis 53 zueinander von der Höhe der Faltenwände bestimmt. Die Prägeleisten 50 bis 53 formen nämlich beim Kontakt mit dem Filtermedium 11 im Walzspalt 43 durch thermisches Prägen, also durch Verschweißen der einzelen aus thermoplastischen Werkstoff bestehenden Lagen des Filtermediums 11 bzw. der thermoplastischer Fasern, die quernahtförmigen Bereiche. Diese wirken als Filmscharniere, bilden die Faltenkanten 55 und 56 und sind in diesem Bereich derart verdichtet, so daß keine Hohlräume mehr vorhanden sind. Dadurch erhält das Filtermedium 11 die erwünschte Quersteifigkeit.

Das Maß des Abstands der Prägeringe 49 zueinander entspricht dem Maß des Abstands in dem die in dieser Figur nicht dargestellten Geraden 31 bis 34 zueinander angeordnet sind. Die Prägeringe 49 wirken beim Walzspaltendurchtritt des Filtermediums 11 den Prägeleisten 50 bis 53 nahezu entsprechend. Lediglich die durch das thermische Prägen erzeugten nahtförmigen Bereiche sind der Länge nach kontinuierlich ausgebildet und geben dem Filtermedium 11 die für den weiteren Arbeitsvorgang notwendige Längssteifigkeit.

Durch einen kleinen und großen Walzendurchmesserbereich 58 und 59 der Walzen 44 und 45 und durch die Anordnung sowie Ausbildung der Prägeelemente wird das Filtermedium unterschiedlich stark schweißbehandelt. Die nahtförmigen Bereiche, längsnahtförmige Bereiche 301 und die Faltenkanten 55 bis 57, sind durchgeschweißt, die Oberflächen zwischen den Faltenkanten 55 bis 57 und den längsnahtförmigen Bereichen 301 sind angeschweißt und der Teil des Filtermediums, der den Walzspalt 43 im kleinen Walzendurchmesserbereich 58 durchtritt, ist nicht schweißbehandelt. Dadurch können in vorteilhafter Weise, der Walzen- und Prägeelementausbildung entsprechend, unterschiedlich stark behandelte Schweißbereiche kontinuierlich erzeugt werden.

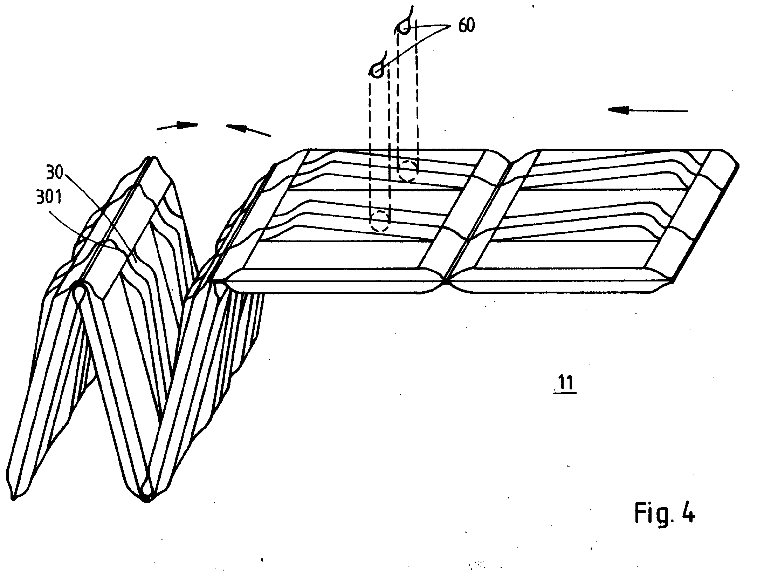

In das Filtermedium 11, das in Figur 4 dargestellt ist, sind die Vorsprünge 30 in die längsnahtförmigen Bereiche 301 eingeprägt. Das Filtermedium 11 entspricht im wesentlichen dem anhand der Figuren 1a und 1b beschriebenen Filtermedium 11. Es ist lediglich noch nicht gefaltet und die einander zugeordneten Vorsprünge 30 sind ebenfalls noch nicht miteinander verschweißt. Der Schweiß- und Faltvorgang des Filtermediums ist in dieser Figur anhand der Bewegungspfeile näher dargestellt.

Die Oberflächen der Vorsprünge 30 des Filtermediums 11 werden durch eine Infrarotvorrichtung 60 angestrahlt, erhitzt und somit aufgeschweißt. Unmittelbar anschließend wird das Filtermedium 11 den Bewegungspfeilen entsprechend zusammengefaltet, so daß die einander zugeordneten Vorsprünge aneinander anliegen. Die Erhitzung durch die Infrarotstrahlung ist dabei so stark, daß die einander zugeordneten, aufgeschmolzenen Oberflächen der Vorsprünge 30 erst nachdem sie aneinander anliegen erkalten und auf diese Weise miteinander verschweißen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

## Patentansprüche

1. Filtereinsatz (12), in insbesondere quaderförmiger Ausbildung, bestehend aus einer Vielzahl von in zick-zack-förmiger Faltung angeordneten Faltenwänden (15-22;38,39) für ein in Richtung von einem Kantenbereich (13) der Zick-Zack-Faltung in Richtung auf den gegenüberliegenden Kantenbereich (14) der Faltung durch den Einsatz hindurchtretendes zu filterndes Medium, bestehend aus einem Filtermedium (11) mit aus jeder Faltenwand (15-22;38,39) in Richtung auf eine benachbarte Faltenwand vortretenden, durch Prägung erzeugten Vorsprüngen, (30,36,37) wobei die Vorsprünge einander benachbarter zugewandter Faltenwände zur Abstandswahrung aneinander angrenzen und das Filtermedium (11) mindestens im Bereich der Vorsprünge durch Wärmeeinwirkung aushärtbar ist,
**dadurch gekennzeichnet,**
daß das Filtermedium (11) aus einem thermoplastischen Werkstoff bestehende Fasern enthält, welche durch Verschweißung unter wärmeeinwirkung im Bereich der Vorsprünge (30, 36, 37) und/oder Faltenkanten (23 bis 29, 40, 55 bis 57) das Medium (11) in sich selbst verdichten bzw. aussteifen oder mit benachbarten Bereichen des Mediums verbinden.

2. Filtereinsatz nach Anspruch 1, **dadurch ge****kennzeichnet,** daß nahtförmige Bereiche (23-29) vorgesehen sind, in denen die Fasern ohne wesentliche Hohlräume miteinander verbunden sind.

3. Filtereinsatz nach einem der vorangehenden Ansprüche, **dadurch gekennzeichnet,** daß das Filtermedium (11) mehrlagig ausgebildet ist, wobei einzelne Lagen bereichsweise miteinander verschweißt sind.

4. Filtereinsatz nach einem der vorangehenden Ansprüche, **dadurch gekennzeichnet,** daß das Filtermedium (11) Fasern, mindestens Faseranteile, aus Polypropylen, Cellulose, Polycarbonat, Polyamid, Teflon und/oder Polyester enthält.

5. Filtereinsatz nach einem der vorangehenden Ansprüche, **dadurch gekennzeichnet,** daß mindestens eine der äußeren Lagen des mehrlagigen Filtermediums (11) als siebartig gelochte, folienartige Schutzschicht ausgebildet ist.

6. Filtereinsatz nach Anspruch 5, **dadurch gekennzeichnet,** daß die äußeren Lagen ebenfalls aus thermoplastischem Material bestehen und insbesondere zur Erzeugung der nahtförmigen Bereiche (23-29) direkt miteinander verschweißt sind.

7. Filtereinsatz nach einem der Ansprüche 2 bis 6, **dadurch gekennzeichnet,** daß die nahtförmigen verschweißten Bereiche (23-29) als Filmscharnier ausgebildet sind.

8. Filtereinsatz nach einem der vorangehenden Ansprüche, **dadurch gekennzeichnet,** daß die verdichteten Bereiche eine zusätzliche Aussteifung bildende nahtförmige Bereiche aufweisen.

9. Filtereinsatz nach einem der vorangehenden Ansprüche, **dadurch gekennzeichnet,** daß die einander zugewandten Vorsprünge (30, 36, 37) benachbarter Faltenwände (15 bis 22, 38, 39) miteinander verschweißt sind.

10. Verfahren zur Herstellung eines Filtereinsatzes nach Anspruch 1, **dadurch gekennzeichnet,** daß das folienartige Filtermedium (11) durch Erwärmen vorbestimmter Bereiche bei definierter Temperatur und definiertem Druck, gleichzeitig oder nacheinander, durch Walzen bzw. Stempel oder Kämme mit dem Bereichen versehen wird, in denen die thermoplastischen Fasern verdichtet und verschweißt sind, so daß das Filtermedium (11) eine erhöhte Längs- bzw. Quersteifigkeit erhält, wobei insbesondere nahtartige Bereiche unter erhöhtem Druck bei gleicher Temperatur erzeugt werden.

11. Verfahren nach Anspruch 10, **dadurch gekennzeichnet,** daß nacheinander nahtförmige, insbesondere quernahtförmige, Bereiche durch Schweißung, sowie Verformungen, insbesondere Vorsprünge (30, 36, 37), in Form von thermischen Prägungen des Filtermediums (11) erzeugt werden und anschließend das Filtermedium (11) so gefaltet wird, daß die benachbarten, einander zugewandten Vorsprünge (30, 36, 37) aneinander anliegen.

12. Verfahren nach Anspruch 11, **dadurch gekennzeichnet,** daß die Vorsprünge (30, 36, 37) vor dem Zusammenfalten von einer zugeordneten Heizvorrichtung so hoch erhitzt werden, daß die verflüssigten Oberflächenbereiche der Vorsprünge (30, 36, 37) erst nach dem Zusammenfalten des Filtermediums (11), wenn die angeschweißten, benachbarten, einander zugewandten Vorsprünge (30, 36, 37) aneinander anliegen, miteinander verschweißen.

13. Verfahren nach einem der Ansprüche 10 bis 12, **dadurch gekennzeichnet,** daß dem Filtermedium (11) Wärmeenergie durch Infrarotstrahlung, Ultraschall, Laserstrahlung und/oder, insbesondere kammförmige oder walzen- bzw. stempelförmige, Heizelemente bereichsweise zugeführt wird.

## Claims

1. A filter insert (12), in particular of quadrate shape design, comprising a plurality of folded walls (15-22, 38,39) of zig zag formed folds for a medium to be filtered passing in a direction from an edge zone (13) of zig zag folds through the insert in direction towards the opposite edge zone (14) of the folds, comprising a filter medium (11) having projections (30,36,37) produced from each folded wall (15-22, 38,39) by embossment protruding in a direction towards an adjacent folded wall, in which the projections of adjacent facing folded walls touch each other to maintain a distance from each other and the filter medium (11) can be hardened at least in the zone of the projections by thermal effect, characterised in that the filter medium (11) contains fibres of a thermoplastic material which becomes intrinsically compacted or stiffened in the medium by welding under the influence of heat in the zone of the projections (30,36,37) and/or folded edges (23 to 29, 40,55 to 57) or join with adjacent zones of the medium.

2. A filter insert according to claim 1 characterised in that seam-like zones (23-29) are provided in which the fibres are bonded together without major cavities.

3. A filter insert according to one of the previous claims, characterised in that the filter medium (11) is formed multi-layered, in which individual layers are welded zone-wise together.

4. A filter insert according to one of the previous claims, characterised in that the filter medium (11) contains fibres, at least fibre portions made of polypropylene, cellulose, polycarbonate, polyamide, teflon and/or polyester.

5. A filter insert according to one of the previous claims, characterised in that at least one of the external layers of the multi-layered filter medium (11) is designed as sieve-like perforated, sheet-like protective coating.

6. A filter insert according to claim 5 characterised in that the external layers are also made of thermoplastic material and in particular are welded directly together for producing the seam-like zones (23-29).

7. A filter insert according to one of the claims 2 to 6, characterised in that the seam-like welded zones (23-29) are designed as a film hinge.

8. A filter insert according to one of the previous claims, characterised in that the compacted zones feature seam-like zones forming an additional stiffening.

9. A filter insert according to one of the previous claims characterised in that the projections (30,36,37) facing each other of adjacent folded walls (15 to 22, 38,39) are welded together.

10. A method for manufacturing a filter insert according to claim 1, characterised in that the sheet-like filter medium (11) is provided with the zones in which the thermoplastic fibres are compacted and welded by heating predetermined zones at defined temperature and defined pressure simultaneously or successively by rolls, stamp or comb, so that the filter medium (11) obtains an increased longitudinal or transversal stiffness, for which in particular seam-like zones are produced under increased pressure at similar temperature.

11. A method according to claim 10, characterised in that successive seam-like zones, in particular transverse seam-like zones are produced by welding, as well as by deformations, in particular projections (30,36,37), in the form of thermal embossments of the filter medium (11) and then the filter medium (11) folded such that the adjacent projections (30,36,37) facing each other lie against each other.

12. A method according to claim 11 characterised in that the projections (30,36,37) are heated sufficiently prior to folding together by an assigned heating device so that the liquified surface zones of the projections (30,36,37) only weld together after folding together of the filter medium (11) when the welded, adjacent projections (30,36, 37) facing each other lie against each other.

13. A method according to one of the claims 10 to 12 characterised in that thermal energy is applied zone-wise to the filter medium (11) by infra-red radiation, ultra-sound, laser-beam and/or in particular by comb, roller, or stamp-shaped heating elements.

## Revendications

1. Cartouche filtrante (12), en particulier de configuration parallélépipédique, consistant en une multiplicité de parois de plis (15-22; 38, 39) disposées à la manière d'une structure plissée en zigzag, pour un milieu à filtrer traversant la cartouche d'un domaine de bordure (13) de la structure plissée en zigzag en direction du domaine de bordure (14) opposé de la structure plissée, consistant en un agent filtrant (11) comportent des protubérances (30, 36, 37) formées par gaufrage, qui font saillie de chaque paroi de plis (15-22; 38, 39) en direction d'une paroi de plis voisine, les protubérances des parois de plis voisines tournées l'une vers l'autre étant contiguës pour le respect de la distance et l'agent filtrant (11) pouvant être durci par l'action de la chaleur au moins dans le domaine des protubérances, caractérisée en ce que l'agent filtrant (11) contient des fibres consistant en une matière thermoplastique qui, par soudage sous l'action de la chaleur dans le domaine des protubérances (30, 36, 37) et/ou des bordures de plis (23 à 29, 40, 55 à 57) densifient ou rigidifient l'agent (11) lui-même ou le relient à des domaines voisins de l'agent.

2. Cartouche filtrante selon la revendication 1, caractérisée en ce qu'il est prévu des domaines en forme de ligne de joint (23-29) dans lesquels les fibres sont reliées entre elles sans cavités sensibles.

3. Cartouche filtrante selon l'une des revendications précédentes, caractérisée en ce que l'agent filtrant (11) est en plusieurs couches, certaines couches étant soudées les unes aux autres suivant des domaines.

4. Cartouche filtrante selon l'une des revendications précédentes, caractérisée en ce que l'agent filtrant (11) contient des fibres, au moins des proportions de fibres, de polypropylène, de cellulose, de polycarbonate, de polyamide, de Téflon et/ou de polyester.

5. Cartouche filtrante selon l'une des revendications précédentes, caractérisée en ce que l'une au moins des couches externes de l'agent filtrant multi-couche (11) est sous forme d'une couche protectrice en forme de feuille, perforée à la manière d'un tamis.

6. Cartouche filtrante selon la revendication 5, caractérisée en ce que les couches externes consistent elles aussi en matière thermoplastique et sont soudées directement entre elles, en particulier pour former les domaines en forme de ligne de joint (23-29).

7. Cartouche filtrante selon l'une des revendications 2 à 6, caractérisée en ce que les domaines soudés en forme de ligne de joint (23-29) sont sous forme de chamière à film.

8. Cartouche filtrante selon l'une des revendications précédentes, caractérisée en ce que les domaines densifiés présentent des domaines en forme de ligne de joint formant un renforcement supplémentaire.

9. Cartouche filtrante selon l'une des revendications précédentes, caractérisée en ce que les protubérances (30, 36, 37) tournées les unes vers les autres des parois de plis (15 à 22, 38, 39) voisines sont soudées entre elles.

10. Procédé de fabrication d'une cartouche filtrante selon la revendication 1, caractérisé en ce que l'agent filtrant en forme de feuille (11) est muni, par chauffage de domaines prédéterminés à une température définie et à une pression définie, simultanément ou successivement, par des cylindres, des poinçons ou des peignes, des domaines dans lesquels les fibres thermoplastiques sont densifiées ou soudées, de sorte que l'agent filtrant (11) revêt une rigidité longitudinale ou transversale plus élevée si bien qu'il en résulte en particulier la formation de domaines en forme de ligne de joint sous pression élevée à la même température.

11. Procédé selon la revendication 10, caractérisé par la formation par soudage de domaines en forme de ligne de joint successifs, en particulier en forme de ligne de joint transervale, et d'éléments déformés, en particulier de protubérances (30,36,37), sous forme d'élément gaufrés thermiquement de l'agent filtrant (11), après quoi l'agent filtrant (11) est plié de telle manière que les protubérances (30, 36, 37) voisines, tournées les unes vers les autres, s'appuient les unes contre les autres.

12. Procédé selon la revendication 11, caractérisé en ce que les protubérances (30, 36, 37) sont chauffées avant le pliage, par un dispositif de chauffage associé, jusqu'à une température telle que les domaines superficiels liquéfiés des protubérances (30, 36, 37) ne se soudent entre eux qu'après le pliage de l'agent filtrant (11), lorsque les protubérances (30, 36, 37) soudées, voisines et tournées les unes vers les autres s'appuient les unes contre les autres.

13. Procédé selon l'une des revendications 10 à 12, caractérisé en ce que de l'énergie thermique est communiquée suivant des domaines à l'agent filtrant (11) par rayonnement infrarouge, ultrasons, faisceau laser et/ou en particulier par des éléments chauffants en forme de peignes, de cylindres ou de poinçons.
